# EUROPÄISCHE PATENTSCHRIFT

(11) **EP 0 515 915 B1**
(45) Veröffentlichungstag und Bekanntmachung des Hinweises auf die Patenterteilung: **02.08.1995**
(21) Anmeldenummer: 92108125.3
(22) Anmeldetag: 14.05.1992
(51) Int. Cl.: D06M 15/65, C08L 83/08

(54) **Wässrige Dispersionen von Polysiloxanen**
Aqueous dispersions of polysiloxanes
Dispersions aqueuses de polysiloxanes

(30) Priorität: 31.05.1991 DE 4117864
(43) Veröffentlichungstag der Anmeldung: 02.12.1992
(73) Patentinhaber: Pfersee Chemie GmbH, 86460 Langweid a. Lech (DE)
(72) Erfinder: Chrobaczek, Harald, Dr., W-8900 Augsburg (DE); Tschida, Günther, W-8930 Schwabmünchen (DE)

(56) Entgegenhaltungen:
- EP-A- 0 342 830
- EP-A- 0 412 324
- GB-A- 2 159 547
- US-A- 4 376 149
- US-A- 4 496 687

## Beschreibung

Die Erfindung betrifft wäßrige Dispersionen, welche mindestens zwei voneinander verschiedene Polysiloxane bestimmter Typen enthalten, und die Verwendung solcher Dispersionen zur Behandlung von Fasermaterialien.

Es ist bekannt, Fasermaterialien, wie z.B. textile Flächengebilde, mit wäßrigen Dispersionen von Polysiloxanen zu behandeln. Hierfür werden bereits unter anderem Polysiloxane verwendet, welche Aminogruppen an den Enden der Hauptketten oder in Seitenketten des Polysiloxans aufweisen. Dies ist beispielsweise in der EP-A 0 138 192 oder in der WO 88/08436 beschrieben. Mittels solcher aminofunktioneller Polysiloxane läßt sich den ausgerüsteten Textilien ein angenehmer weicher Griff vermitteln. Ein Nachteil bei der Verwendung von wäßrigen Dispersionen, welche nur solche aminofunktionellen Polysiloxane enthalten, besteht darin, daß die ausgerüsteten Textilmaterialien eine Vergilbungsneigung aufweisen, insbesondere nach einer Behandlung bei erhöhten Temperaturen.
Eine geringere Vergilbungsneigung als im Fall rein aminofunktioneller Polysiloxane tritt auf, wenn die Textilmaterialien mit Polysiloxanen behandelt werden, welche Amidogruppen enthalten. Dies beschreiben beispielsweise die EP-A 0 342 830 und die EP-A 0 342 834. Die dort genannten Polysiloxane enthalten außerdem noch primäre und/oder sekundäre Aminogruppen.

Ein nicht optimales Ergebnis erbrachten Versuche, die günstigen Eigenschaften von amidofunktionellen Polysiloxanen (geringere Vergilbungstendenz) mit denen von aminofunktionellen Polysiloxanen (noch weicherer Griff) zu kombinieren, entweder durch Verwendung eines Polysiloxans mit Amido- und Aminogruppen im gleichen Molekül, oder durch Verwendung zweier verschiedener Polysiloxane, wovon das eine Amido-, das andere Aminogruppen enthielt. Es stellte sich nämlich heraus, daß relativ große Mengen an Dispergatoren erforderlich sind, um stabile wäßrige Dispersionen solcher Produkte zu erhalten. Die üblicherweise hierfür als Dispergatoren verwendeten nichtionischen Ethylenoxidaddukte von Fettalkoholen, Fettsäuren, Alkylphenolen und Fettaminen führen vor allem bei Einsatz größerer Mengen zu nicht befriedigenden Reibechtheiten der ausgerüsteten Fasermaterialien. Auch bezüglich Waschpermanenz der Ausrüstung können Probleme auftreten.

Der vorliegenden Erfindung lag die Aufgabe zugrunde, wäßrige Dispersionen von Polysiloxanen zur Verfügung zu stellen, welche infolge der Anwesenheit von Amino- und von Amidogruppen den damit ausgerüsteten Fasermaterialien welchen Griff und niedrige Vergilbungstendenz bei guter Reibechtheit und guter Waschpermanenz verleihen.

Die Aufgabe wurde gelöst durch eine wäßrige Dispersion, welche mindestens folgende Komponenten enthält
a) ein stickstofffreies Polysiloxan mit durchschnittlich mindestens 2 direkt an je ein Siliciumatom gebundenen Hydroxylgruppen
b) ein Polysiloxan, welches durchschnittlich mindestens eine Amidogruppe im Molekül enthält

mit der Maßgabe, daß entweder Komponente b) zusätzlich mindestens eine primäre Aminogruppe enthält oder daß die Dispersion zusätzlich als Komponente c) ein Polysiloxan mit durchschnittlich mindestens einer primären Aminogruppe im Molekül enthält.

Überraschenderweise wurde festgestellt, daß die Anwesenheit der Komponente a), nämlich eines stickstofffreien Polysiloxans mit durchschnittlich mindestens 2 direkt an je ein Siliciumatom gebundenen Hydroxylgruppen, dazu führt, daß der Gehalt an üblicherweise verwendeten Dispergatoren der oben genannten Typen niedriger gehalten werden kann als bei bekannten Zusammensetzungen, weiche diese Komponente a) nicht enthalten. Fasermaterialien, welche mit erfindungsgemäßen Dispersionen ausgerüstet wurden, wiesen angenehm weichen Griff geringe Vergilbungstendenz auf, zeigten gute Reibechtheiten und gute Waschpermanenz. Es ist möglich, z.B. durch geeignete Herstellungsverfahren, die unten näher erläutert werden, erfindungsgemäße Dispersionen in Form von Mikroemulsionen herzustellen.

Die erfindungsgemäßen Dispersionen enthalten mindestens die Komponenten a) und b), die oben genannt wurden. Falls als Komponente b) ein Polysiloxan verwendet wird, das Amidogruppen, aber keine primären Aminogruppen enthält, so muß in den erfindungsgemäßen Dispersionen noch eine dritte Komponente c) anwesend sein. Komponente c) ist ein Polysiloxan, das durchschnittlich mindestens eine primäre Aminogruppe im Molekül enthält. Komponente c) kann aber zusätzlich noch eine oder mehrere Amidogruppen enthalten. Dies bedeutet, daß in den erfindungsgemäßen Dispersionen amidofunktionelle Polysiloxane mit zusätzlichen Aminogruppen und amidofunktionelle Polysiloxane ohne primäre Aminogruppen nebeneinander vorliegen können. Polysiloxane mit primären Aminogruppen sind in den erfindungsgemäßen Dispersionen erforderlich, weil die primären Aminogruppen den angenehm weichen Griff der ausgerüsteten Fasermaterialien noch weiter verbessern. Falls Komponente b) sowohl Amidogruppen als auch primäre Aminogruppen enthält, ist die Anwesenheit einer Komponente c) zwar nicht unbedingt erforderlich. Eine bevorzugte Ausführungsform der erfindungsgemäßen Dispersionen besteht jedoch darin, daß auch für den Fall, daß Komponente b) ein Polysiloxan ist, das sowohl Amido- als auch primäre Aminogruppen enthält, eine Komponente c), d.h. ein Polysiloxan mit primären Aminogruppen anwesend ist. Komponente c) ist vorzugsweise ein Polysiloxan, das keine Amidogruppen enthält. Sowohl Komponente b) als auch Komponente c) können zusätzlich zu den Stickstoffunktionen noch andere funktionelle Gruppen wie z.B. Hydroxylgruppen enthalten. Geeignet für erfindungsgemäße Dispersionen sind z.B. solche stickstoffhaltige Komponenten b) und c), welche ein lineares Polysiloxangerüst aufweisen und an den beiden endständigen Siliciumatomen je eine direkt an Si gebundene Hydroxylgruppe tragen.

Als Polysiloxane im Sinne der Erfindung werden Verbindungen verstanden, welche durchschnittlich mindestens 10 Si-O-Einheiten im Molekül aufweisen. Bevorzugt werden als Komponenten b) und c) Polysiloxane mit 100 bis 1000 Si-O-Einheiten eingesetzt. Als Komponente a) dagegen werden bevorzugt niedrigmolekulare Polysiloxane mit niedriger Viskosität verwendet. Auf Grund der dem Fachmann geläufigen Tatsache, daß in Polymeren eine gewisse Verteilung von Kettenlängen vorliegt, bezieht sich die obengenannte Anzahl von mindestens 10 Si-O-Einheiten auf den Durchschnitt, den eine größere Anzahl von Molekülen aufweist. Auch die Angaben "durchschnittlich" in den Patentansprüchen und in der Beschreibung, was die Anzahl funktioneller Gruppen im Polysiloxan betrifft, rühren daher, daß die Anzahl der in einzelnen Molekülen anwesenden funktionellen Gruppen einer gewissen Verteilung unterworfen ist. Es ist also durchaus möglich, daß einzelne Moleküle der Komponenten a), b) und c) weniger funktionelle Gruppen enthalten, als in den Patentansprüchen durch den Ausdruck "mindestens..." angegeben ist, sofern dieser Mindestwert durchschnittlich bei einer größeren Anzahl von Molekülen erreicht wird.

Die Komponenten a), b) und c) können jeweils ein Polysiloxan sein, das eine unverzweigte (Si-O)ₓ -Kette aufweist, die Ketten können aber auch verzweigt sein, so daß Si-O-Einheiten nicht nur in einer Kette auftreten. Die direkt an je ein Si-Atom gebundenen Hydroxylgruppen von Komponente a) können an den beiden Enden der Hauptkette vorliegen; es können in diesem Fall zusätzliche Hydroxylgruppen in Seitenketten anwesend sein, und es können zusätzlich eine oder mehrere Hydroxylgruppen auch direkt an nicht-endständige Siliciumatome der Hauptkette gebunden sein. Die beiden Hydroxylgruppen, die (durchschnittlich) mindestens in Komponente a) anwesend sind, müssen aber nicht beide an endständige Siliciumatome der Hauptkette gebunden sein; vielmehr können eine oder beide dieser Hydroxylgruppen auch direkt an je ein nicht-endständiges Siliciumatom gebunden sein. In diesem Fall sind an die hydroxylgruppenfreien endständigen Siliciumatome vorzugsweise 3 Methylgruppen gebunden.

Die in den Komponenten b) und c) enthaltenen Amidogruppen und primären Aminogruppen sind bevorzugt über zweiwertige Reste an je ein Siliciumatom gebunden, vorzugsweise nicht an endständige Siliciumatome der Polysiloxankette, sondern jeweils an je ein Siliciumatom innerhalb der Kette. Die genannten zweiwertigen Reste, die sich zwischen dem jeweiligen Siliciumatom und der primären Aminogruppe bzw. der Amidogruppe befinden, sind bevorzugt Alkylenreste. Diese können durch ein Schwefel- oder Sauerstoffatom unterbrochen sein. Besonders günstige Ergebnisse werden erhalten, wenn diese Alkylenreste durch eine NH-Gruppe unterbrochen sind. Im Fall dieser besonders bevorzugten Ausführungsform befindet sich zwischen der primären Aminogruppe und dem betreffenden Siliciumatom von Komponente c) eine sekundäre Aminogruppe, und auch in Komponente b) befindet sich bevorzugt zwischen der Amidogruppe und dem betreffenden Siliciumatom eine sekundäre Aminogruppe. Falls Komponente b) zusätzlich amidogruppenfreie Reste mit primären Aminogruppen enthält, sind auch eine oder mehrere dieser primären Aminogruppen vorzugsweise über eine Alkylengruppe, die durch eine sekundäre Aminogruppe unterbrochen ist, an das betreffende Siliciumatom gebunden. Enthält Komponente c) durchschnittlich mehr als eine primäre Aminogruppe im Molekül, so ist vorzugsweise mindestens eine über einen durch eine sekundäre Aminogruppe unterbrochenen Alkylenrest an ein Siliciumatom gebunden.

Für die erfindungsgemäßen Dispersionen besonders geeignete Komponenten a) sind Polysiloxane, die sich von Polydimethylsiloxanen durch Ersatz von durchschnittlich mindestens zwei Methylgruppen pro Molekül durch Hydroxylgruppen ableiten. Die Komponenten b) und c) sind vorzugsweise von Polydimethylsiloxanen abgeleitet, und zwar durch Ersatz von durchschnittlich mindestens einer Methylgruppe durch einen Rest, der eine Amido- bzw. eine primäre Aminogruppe enthält. Die Komponenten a), b) und c) sind also vorzugsweise Polysiloxane, in denen alle an Siliciumatome gebundenen Reste, welche weder Sauerstoff noch Stickstoff enthalten, Methylreste sind.

Als Komponente a) geeignete Produkte sind in der DE-PS 30 35 824 und in der DE-AS 24 59 936 beschrieben. Solche Polysiloxane mit durchschnittlich mindestens zwei direkt an je ein Siliciumatom gebundenen Hydroxylgruppen sind im Handel erhältlich.
In Komponente a) sind durchschnittlich mindestens zwei Hydroxylgruppen pro Molekül direkt an je ein Siliciumatom gebunden, d.h. das Polysiloxan enthält durchschnittlich mindestens zwei -Si-OH-Einheiten. Vorzugsweise werden als Komponente a) Polysiloxane, insbesondere solche auf Basis Polydimethylsiloxan, verwendet, die durchschnittlich 0,1 bis 0,5 Hydroxylgruppen pro Siliciumatom enthalten. Sind durchschnittlich mehr als zwei Hydroxylgruppen pro Molekül anwesend, so müssen mindestens zwei direkt an je ein Siliciumatom gebunden sein, die übrigen können ebenfalls direkt an je ein Siliciumatom gebunden sein oder es können sich zwischen den Hydroxylgruppen und den betreffenden Siliciumatomen Alkylenbrücken befinden, insbesondere Alkylenbrücken mit 1 bis 4 Kohlenstoffatomen.
Die Bestimmung der durchschnittlichen Anzahl der Hydroxylgruppen pro Siliciumatom kann auf folgendem Weg erfolgen: Man ermittelt über ²⁹Si-NMR-Spektroskopie das Verhältnis der Anzahl derjenigen Si-Atome, an die Hydroxylgruppen, ggf. z.T. über Alkylenbrücken, gebunden sind, zur Anzahl derjenigen Si-Atome, an die keine OH-Gruppen oder OH-Gruppen enthaltende Reste gebunden sind, ggf. nach vorhergehender Abtrennung des als Komponente a) dienenden Polysiloxans von stickstoffhaltigen Polysiloxanen. Diese Abtrennung kann erforderlich werden, wenn Komponente a) im Gemisch mit Hydroxylgruppen enthaltenden amido- oder aminofunktionellen Polysiloxanen vorliegt, und kann mittels Gelpermeationschromatographie erfolgen.

Es hat sich als günstig erwiesen, als Komponente a) Flüssigkeiten mit relativ niedriger Viskosität einzusetzen, d.h. mit einer Viskosität im Bereich von 30 bis 70 mPa.s bei 20°C. Bei Verwendung dieser niedrigviskosen Produkte läßt sich der Gehalt an Dispergatoren in Form ethoxilierter Produkte noch weiter herabsetzen.

Als Komponente b) geeignete Polysiloxane, welche durchschnittlich mindestens eine Amidogruppe im Molekül enthalten, und deren Herstellung sind in der EP-A 0 342 830 und in der EP-A 0 342 834 beschrieben. In diesen Schriften sind ferner Polysiloxane beschrieben, welche außer einer eine sekundäre Aminogruppe und eine Amidogruppe enthaltenden Seitenkette noch eine Seitenkette aufweisen, die eine sekundäre und eine primäre Aminogruppe enthält. Diese Polysiloxane sind auch für die erfindungsgemäßen Dispersionen als Komponente b) gut geeignet. Es ist bei Verwendung solcher Produkte, die neben Amidogruppen noch zusätzlich primäre Aminogruppen enthalten, nicht mehr unbedingt erforderlich, aber vorteilhaft, den erfindungsgemäßen Dispersionen noch (als Komponente c)) ein Polysiloxan zuzusetzen, das durchschnittlich mindestens eine primäre und ggf. zusätzlich eine oder mehrere sekundäre Aminogruppen im Molekül, jedoch keine Amidogruppen enthält. Hierdurch lässt sich ein noch weicherer Griff der ausgerüsteten Fasermaterialien erzielen.

Als Komponente b) werden bevorzugt Produkte eingesetzt, welche sich von Polydimethylsiloxanen dadurch ableiten, daß eine oder mehrere Methylgruppen jeweils durch einen Rest R ersetzt sind und daß jeder dieser Reste R zwei Stickstoffatome enthält. Mindestens einer der Reste R muß eine Amidogruppe enthalten, von den übrigen können ein Teil oder alle ebenfalls eine oder zwei Amidogruppen enthalten. Es ist günstig, wenn in allen dieser Reste R eines der beiden Stickstoffatome als sekundäre Aminogruppe vorliegt, das andere entweder als Amidogruppe oder als primäre Aminogruppe, wobei allerdings durchschnittlich mindestens eine Amidogruppe pro Molekül anwesend sein muß. Sehr gut geeignet als Komponente b) der erfindungsgemäßen Dispersionen sind Polysiloxane, welche einen oder mehrere je an ein Siliciumatom gebundenen Reste der Formel 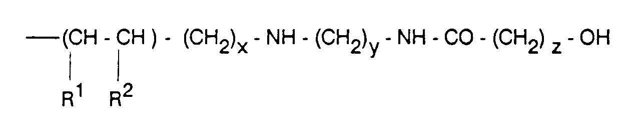
enthalten, worin R¹ und R² unabhängig voneinander für H oder CH₃ stehen, jedoch mindestens einer dieser Reste für H steht, x für eine Zahl von 0 bis 3 und y und z unabhängig voneinander für eine Zahl von 2 bis 4 stehen.
An Stelle der endständigen Hydroxylgruppen können in solchen Resten auch andere hydrophile Gruppen stehen, so z.B. Polyoxyethyleneinheiten. Hydrophile Endgruppen erleichtern die Dispergierung dieser amidofunktionellen Polysiloxane. Auch die amidofunktionellen Polysiloxane mit den oben genannen Resten sind vorzugsweise von Polydimethylsiloxanen durch entsprechende Substitution abgeleitet. Sie enthalten bevorzugt außer den durch obige Formel angegebenen Resten entweder nur noch an Silicium gebundene Methylgruppen oder nur Reste, welche ebenfalls zwei Stickstoffatome aufweisen, die z.B. in Form einer primären und einer sekundären Aminogruppe vorliegen; für die letztgenannte Art von Resten sind solche bevorzugt, wie sie unten als günstige Ausführungsform für Komponente c) beschrieben werden.
In der oben angegebenen Formel für die Amidogruppen enthaltenden Reste stehen y und z unabhängig voneinander vorzugsweise für 2 oder 3 und x vorzugsweise für 1 oder 2.

Komponente c) enthält durchschnittlich mindestens eine primäre Aminogruppe pro Molekül. Bevorzugt wird als Komponente c) ein Polysiloxan eingesetzt, welches keine Amidogruppen enthält, insbesondere ein Polydimethylsiloxan, in dem eine oder mehrere Methylgruppen jeweils durch einen Rest der Formel 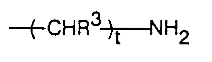
oder einen Rest der Formel 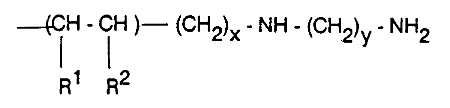
ersetzt sind, wobei R¹, R², x, y die in Anspruch 9 angegebene Bedeutung haben, t einen Wert von 2 bis 4 besitzt und alle Reste R³ unabhängig voneinander für H oder CH₃ stehen. Bevorzugte Werte für x in diesen Resten sind 1 oder 2, für y sind Werte von 2 bis 4 bevorzugt. Als Komponente c) geeignete Polysiloxane sind in der EP-A 0 138 192 und in der WO 88/08436 beschrieben.

Die als Komponente b) verwendeten Polysiloxane enthalten bevorzugt durchschnittlich 1 bis 2,5 Amidogruppen pro 100 Siliciumatome. Die Anzahl der in einem gegebenen Polysiloxan pro Siliciumatom vorliegenden Amidogruppen läßt sich folgendermaßen bestimmen:
Man ermittelt, z.B. über ²⁹Si-NMR-Spektroskopie, die Anzahl der Siliciumatome und durch eine Stickstoffbestimmung nach Kjeldahl die Anzahl der Amidogruppen. Sind zusätzlich primäre und/oder sekundäre Aminogruppen anwesend, so wird deren Anzahl bei der Kjeldahl-Bestimmung mit erfaßt und muß deshalb subtrahiert werden. Dies ist möglich nach ihrer getrennten Bestimmung mittels potentiometrischer Titration, bei der die wesentlich weniger basischen Amidogruppen nicht erfaßt werden.
Die erfindungsgemäßen Dispersionen besitzen den Vorteil, daß - bedingt durch die Anwesenheit Hydroxylgruppen enthaltender stickstofffreier Polysiloxane - der Gehalt an üblicherweise verwendeten Dispergatoren geringer gehalten werden kann als im Fall bekannter Dispersionen amidofunktioneller Polysiloxane. Dies hat günstige Auswirkungen auf die Reibechtheit von textilen Flächengebilden, welche mit erfindungsgemäßen Dispersionen ausgerüstet wurden. Gegebenenfalls kann sogar auf den Zusatz von Dispergatoren ganz verzichtet werden, z.B. dann, wenn auf Grund der Anwesenheit von entsprechenden Seitenketten in den Polysiloxanen stabile wäßrige Dispersionen auch ohne Dispergatorzusatz erhalten werden. Solche Seitenketten können beispielsweise Polyoxyäthylen- oder Polyoxypropyleneinheiten oder kationische Gruppen enthalten. Die Anwesenheit kationischer Gruppen kann außerdem dazu führen, daß Fasermaterialien mit erfindungsgemäßen Dispersionen nach einem Ausziehverfahren behandelt werden können.
Die erfindungsgemäßen Dispersionen enthalten in einer bevorzugten Ausführungsform außer den Komponenten a), b) und ggf. c) noch einen Dispergator oder ein Gemisch von Dispergatoren in einer Menge von 25 bis 60 Gewichtsteilen, bezogen auf 100 Gewichtsteile an der Gesamtmenge an Polysiloxanen. Falls erfindungsgemäße Dispersionen für Zwecke eingesetzt werden sollen, wo ein höherer Gehalt an Dispergator nicht stört, kann der Gehalt auch noch höher als 60 Gewichtsteile sein.
Geeignet als Dispergatoren sind beispielsweise nichtionische Produkte wie Ethoxilate von Fettalkoholen, Fettsäuren, Fettaminen und Alkylphenolen. Weitere geeignete Dispergatoren sind in der WO 88/08436 und in der EP-A 0 138 192 genannt.

Es ist möglich, erfindungsgemäße Dispersionen in Form sogenannter Mikroemulsionen herzustellen. Mikroemulsionen besitzen unter anderem den Vorteil einer ausgezeichneten Stabilität. Sie enthalten die emulgierten Substanzen in Form sehr Meiner Teilchen und sind durchscheinend bis transparent. Methoden zur Herstellung von Mikroemulsionen, die auch im Fall erfindungsgemäßer Dispersionen angewandt werden können, sind in der EP-A 0 138 192 sowie in der WO 88/08436 beschrieben und gehen aus den unten aufgeführten Ausführungsbeispielen hervor. Beim Arbeiten gemäß den Angaben der WO 88/08436 muß bei der Herstellung von erfindungsgemäßen Dispersionen in Form von Mikroemuisionen mit einem Zusatz von Säure gearbeitet werden; hierzu ist insbesondere Essigsäure geeignet, die beispielsweise in Form einer 60 %igen Lösung in Wasser eingesetzt werden kann. In vielen Fällen ist gegenüber den Angaben der WO 88/0836 eine Reduzierung des Emulgatorgehalts möglich.
Außer über die Angabe der Teilchengrößen gemäß EP-A 0 138 192 können Mikroemulsionen betreffende bevorzugte Ausführungsformen der erfindungsgemäßen Dispersionen auch noch anders charakterisiert werden: Die als Ausführungsform bevorzugten Mikroemulsionen liegen dann vor, wenn mit der in der Broschüre 3/LTP5/500/8.85 BDA 086 der Firma Dr. Bruno Lange GmbH, Industrial Measuring Instruments, Wiesenstr., Düsseldorf, DE, Seiten 3 bis 15, beschriebenen Methode "NTU-Werte" von 200 oder weniger gemessen werden.

Bevorzugt verwendet man in den erfindungsgemäßen Dispersionen die Komponenten b) und ggf. c) in solchen Mengen, daß das durchschnittliche Verhältnis S_{N}:S_{Si} im Bereich von 1:40 bis 1:320, vorzugsweise 1:40 bis 1:110 liegt, wobei S_{N} die Summe der Anzahl der primären Aminogruppen in den Komponenten b) und c) ist und S_{Si} die Summe der Anzahl derjenigen Siliciumatome in den Komponenten b) und c) ist, an die keine stickstoffhaltigen Substituenten gebunden sind. Die Bestimmung dieser Werte kann analog den obigen Angaben durch ²⁹Si-NMR und potentiometrische Titration erfolgen.

Es ist für die Eigenschaften erfindungsgemäßer Dispersionen und die Eigenschaften von damit behandelten Fasermaterialien günstig, wenn die Komponenten a), b) und ggf. c) in solchen Mengenverhältnissen vorliegen, daß bestimmte Verhältnisse der Anzahl von Hydroxyl-, Amido- und Aminogruppen zueinander vorliegen. Eine bevorzugte Ausführungsform besteht deshalb darin, diese Mengenverhältnisse so zu wählen, daß die Anzahl Z_{OH} der Hydroxylgruppen in Komponente a), die gesamte Anzahl Z_{NHCO} der Amidogruppen in Komponenten b) und c) und die gesamte Anzahl Z_{NH2} der primären Aminogruppen in den Komponenten b) und c) zueinander in folgenden Verhältnissen stehen:
- Z_{NH2}:Z_{OH} = 1:0,1 bis 1:21, vorzugsweise 1:0,1 bis 1:3,5 und
- Z_{NH2}:Z_{NHCO} = 1:0,2 bis 1:2,5

Vorteilhafterweise enthalten die erfindungsgemäßen Dispersionen 5 bis 40 Gew.% Polysiloxan (Summe der Komponenten a), b) und c)), und 25 bis 60 Gew.teile Dispergator oder Dispergatorgemisch, bezogen auf 100 Gew.teile der Gesamtmenge an Polysiloxanen. Vor ihrer Anwendung zur Behandlung von Fasermaterialien können, wenn gewünscht, weitere Substanzen zugesetzt werden und die Dispersionen können mit Wasser auf eine niedrigere Gebrauchskonzentration verdünnt werden. Weitere Substanzen, welche zugesetzt werden können, sind Produkte, die üblicherweise für die Ausrüstung von Fasermaterialien verwendet werden, wie z.B. Flammschutzmittel, Fungizide oder ähnliche.

Die erfindungsgemäßen Dispersionen eignen sich ausgezeichnet zur Behandlung von Fasermaterialien, insbesondere textilen Flächengebilden, denen hierdurch ein angenehm weicher Griff verliehen wird. Das Aufbringen der Dispersionen auf die Fasermaterialien kann nach bekannten Methoden geschehen, z.B. über einen Foulard-Prozeß oder - bei entsprechender Struktur der in den Dispersionen enthaltenen Produkte - mittels eines Ausziehverfahrens. Das Aufbringen kann ggf. auch durch Beschichten erfolgen.

Die Erfindung wird nunmehr durch Ausführungsbeispiele veranschaulicht.

### Beispiel 1 (erfindungsgemäß)

In einem heizbaren Rührkessel wurden zu 560 g Wasser unter Rühren nacheinander folgende Produkte gegeben (Gewichtsangaben jeweils auf wasserfreie Produkte bezogen):
a) 50 g Isotridecylalkoholpolyglykolether mit durchschnittlich 7 EO-Einheiten
b) 1,6 g Essigsäure (in Form einer 60 %igen wäßrigen Lösung)
c) 50 g eines Polydimethylsiloxans, bei dem im Durchschnitt etwa 2 % der Methylgruppen durch amidogruppenhaltige Seitenketten ersetzt waren; das Siloxan enthielt keine primären Aminogruppen, die amidogruppenhaltigen Seitenketten entsprachen der im Anspruch 9 angegebenen Formel (mit R¹ = H, R² = CH₃, x = 1, y = 3, z = 3)
d) 20 g eines Hydroxylgruppen enthaltenden Polysiloxans auf Basis Polydimethylsiloxan, das durchschnittlich etwa 0,19 Hydroxylgruppen pro Siliciumatom aufwies; das Siloxan besaß eine Viskosität von ca. 40 mPa.s bei 20°C
e) 70 g eines amidogruppenfreien Polysiloxans auf Basis eines Polydimethylsiloxans, bei dem ein Teil der Methylgruppen durch Reste ersetzt war, die primäre Aminogrupen enthielten.

Das zahlenmäßige Verhältnis der primären Aminogruppen von Komponente e) zu der Gesamtzahl der Siliciumatome aus den Komponenten c) und e) betrug etwa 1:68.

Die Mischung wurde auf 80°C aufgeheizt, 30 Minuten bei 80°C gehalten und dann rasch auf 30°C abgekühlt. Anschließend wurden 240 g Wasser und 1,3 g Essigsäure (in Form einer 60 %igen wäßrigen Lösung) zugegeben. Es resultierte eine fast klare stabile Mikroemulsion.

### Beispiel 2 (erfindungsgemäß)

Beispiel 1 wurde wiederholt, wobei die Art der eingesetzten Produkte und das Arbeitsverfahren unverändert blieben. Nur die Mengen an Produkten wurden verändert, nämlich:
- Komponente a):: 42,5 g
- Komponente b):: 1,4 g
- Komponente c):: 40,0 g
- Komponente d):: 15,0 g
- Komponente e):: 65,0 g

Nach Erwärmen und Abkühlen wurden 280 g Wasser und 1,3 g Essigsäure zugegeben. Es resultierte eine fast klare stabile Mikroemulsion.

### Beispiel 3 (nicht erfindungsgemäßes Vergleichsbeispiel):

Bei diesem Beispiel wurde ohne Zusatz von Hydroxylgruppen enthaltendem Polysiloxan gearbeitet:
Zu 560 g Wasser gab man unter Rühren bei Raumtemperatur
a) 50,0 g Emulgator (wie Komponente a) von Beispiel 1)
b) 1,6 g Essigsäure (wie Komponente b) von Beispiel 1)
c) 50,0 g amidofunktionelles Polysiloxan (wie Komponente c) von Beispiel 1)
d) 70,0 g aminofunktionelles Polysiloxan (wie Komponente e) von Beispiel 1)

Nach Erwärmen und Abkühlen wurden 230 g Wasser und 1,3 g Essigsäure hinzugefügt. Es konnte mit der angegebenen Menge an Emulgator keine stabile Dispersion erhalten werden.

Mit den Mikroemulsionen der Beispiele 1 und 2 ausgerüstete Gewebe zeigten nur geringe Vergilbungstendenz.

## Patentansprüche (Patentansprüche für folgende(n) Vertragsstaat(en): AT, BE, CH, DE, DK, FR, GB, IT, LI, NL, PT, SE)

1. Wäßrige Dispersion, welche mindestens folgende Komponenten enthält
a) ein stickstofffreies Polysiloxan mit durchschnittlich mindestens 2 direkt an je ein Siliciumatom gebundenen Hydroxylgruppen
b) ein Polysiloxan, welches durchschnittlich mindestens eine Amidogruppe im Molekül enthält
mit der Maßgabe, daß entweder Komponente b) zusätzlich mindestens eine primäre Aminogruppe enthält oder daß die Dispersion zusätzlich als Komponente c) ein Polysiloxan mit durchschnittlich mindestens einer primären Aminogruppe im Molekül enthält.

2. Dispersion nach Patentanspruch 1, dadurch gekennzeichnet, daß eine oder beide der Komponenten b) und c) zusätzlich durchschnittlich mindestens eine sekundäre Aminogruppe enthalten.

3. Dispersion nach Patentanspruch 1 oder 2, dadurch gekennzeichnet, daß die Komponenten a), b) und c) Polysiloxane sind, in denen alle an Siliciumatome gebundenen Reste, welche keine Sauerstoffatome oder Stickstoffatome enthalten, Methylreste sind.

4. Dispersion nach einem oder mehreren der Patentansprüche 1 bis 3, dadurch gekennzeichnet, daß sie zusätzlich einen Dispergator oder ein Gemisch von Dispergatoren in einer Menge von 25 bis 60 Gew.teilen, bezogen auf 100 Gew.teile an der Gesamtmenge an Polysiloxanen, enthält.

5. Dispersion nach einem oder mehreren der Patentansprüche 1 bis 4, dadurch gekennzeichnet, daß Komponente a) eine Flüssigkeit mit einer Viskosität von 30 bis 70 mPa.s bei 20°C ist.

6. Dispersion nach einem oder mehreren der Patentansprüche 1 bis 5, dadurch gekennzeichnet, daß Komponente a) durchschnittlich 0,1 bis 0,5 Hydroxylgruppen pro Siliciumatom enthält.

7. Dispersion nach einem oder mehreren der Patentansprüche 1 bis 6, dadurch gekennzeichnet, daß Komponente b) ein Polydimethylsiloxan ist, in dem eine oder mehrere Methylgruppen jeweils durch einen Rest R ersetzt sind und daß jeder dieser Reste R zwei Stickstoffatome enthält.

8. Dispersion nach Patentanspruch 7, dadurch gekennzeichnet, daß ein Teil oder alle der Reste R je eine sekundäre Aminogruppe und eine Amidogruppe enthalten.

9. Dispersion nach einem oder mehreren der Patentansprüche 1 bis 8, dadurch gekennzeichnet, daß Komponente b) ein Polysiloxan ist, das einen oder mehrere, je an ein Siliciumatom gebundene Reste der Formel 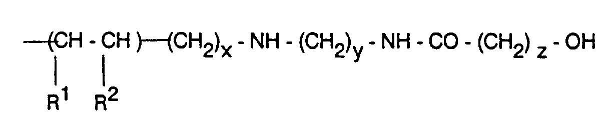 enthält, worin R¹ und R² unabhängig voneinander für H oder CH₃ stehen, jedoch mindestens einer dieser Reste für H steht, x für eine Zahl von 0 bis 3 und y und z unabhängig voneinander für eine Zahl von 2 bis 4 stehen.

10. Dispersion nach einem oder mehreren der Patentansprüche 1 bis 9, dadurch gekennzeichnet, daß Komponente c) ein Polydimethylsiloxan ist, in dem eine oder mehrere Methylgruppen jeweils durch einen Rest der Formel 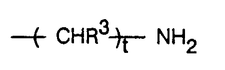 oder einen Rest der Formel 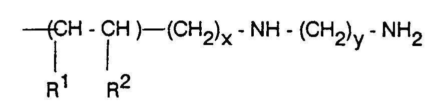 ersetzt sind, wobei R¹, R², x, y die in Anspruch 9 angegebene Bedeutung haben, t einen Wert von 2 bis 4 besitzt und alle Reste R³ unabhängig voneinander für H oder CH₃ stehen.

11. Dispersion nach einem oder mehreren der Patentansprüche 1 bis 10, dadurch gekennzeichnet, daß Komponente b) durchschnittlich 1 bis 2,5 Amidogruppen pro 100 Siliciumatomen enthält.

12. Dispersion nach einem oder mehreren der Patentansprüche 1 bis 11, dadurch gekennzeichnet, daß das durchschnittliche Verhältnis S_{N}:S_{Si} im Bereich von 1:40 bis 1:320, vorzugsweise 1:40 bis 1:110, liegt, wobei S_{N} die Summe der Anzahl der primären Aminogruppen in den Komponenten b) und c) ist und S_{Si} die Summe der Anzahl derjenigen Siliciumatome in den Komponenten b) und c) ist, an die keine stickstoffhaltigen Substituenten gebunden sind.

13. Dispersion nach einem oder mehreren der Patentansprüche 1 bis 12, dadurch gekennzeichnet, daß die Anzahl Z_{OH} der Hydroxylgruppen in Komponente a), die gesamte Anzahl Z_{NHCO} der Amidogruppen in Komponenten b) und c) und die gesamte Anzahl Z_{NH2} der primären Aminogruppen in den Komponenten b) und c) zueinander in folgenden Verhältnissen stehen:
- Z_{NH2}:Z_{OH} = 1:0,1 bis 1:21, vorzugsweise 1:0,1 bis 1:3,5 und
- Z_{NH2}:Z_{NHCO} = 1:0,2 bis 1:2,5

14. Dispersion nach einem oder mehreren der Patentansprüche 1 bis 13, dadurch gekennzeichnet, daß die Dispersion 5 bis 40 Gew.% Polysiloxane (Summe der Komponenten a), b) und c)) enthält.

15. Verwendung einer Dispersion nach einem oder mehreren der Patentansprüche 1 bis 14 zur Behandlung von Fasermaterialien.

## Patentansprüche (Patentansprüche für folgende(n) Vertragsstaat(en): ES)

1. Verwendung einer wäßrigen Dispersion, welche mindestens folgende Komponenten enthält
a) ein stickstofffreies Polysiloxan mit durchschnittlich mindestens 2 direkt an je ein Siliciumatom gebundenen Hydroxylgruppen
b) ein Polysiloxan, welches durchschnittlich mindestens eine Amidogruppe im Molekül enthält
zur Behandlung von Fasermaterialien, mit der Maßgabe, daß entweder Komponente b) zusätzlich mindestens eine primäre Aminogruppe enthält oder daß die Dispersion zusätzlich als Komponente c) ein Polysiloxan mit durchschnittlich mindestens einer primären Aminogruppe im Molekül enthält.

2. Verwendung einer Dispersion nach Patentanspruch 1, dadurch gekennzeichnet, daß eine oder beide der Komponenten b) und c) zusätzlich durchschnittlich mindestens eine sekundäre Aminogruppe enthalten.

3. Verwendung einer Dispersion nach Patentanspruch 1 oder 2, dadurch gekennzeichnet, daß die Komponenten a), b) und c) Polysiloxane sind, in denen alle an Siliciumatome gebundenen Reste, welche keine Sauerstoffatome oder Stickstoffatome enthalten, Methylreste sind.

4. Verwendung einer Dispersion nach einem oder mehreren der Patentansprüche 1 bis 3, dadurch gekennzeichnet, daß sie zusätzlich einen Dispergator oder ein Gemisch von Dispergatoren in einer Menge von 25 bis 60 Gew.teilen, bezogen auf 100 Gew.teile an der Gesamtmenge an Polysiloxanen, enthält.

5. Verwendung einer Dispersion nach einem oder mehreren der Patentansprüche 1 bis 4, dadurch gekennzeichnet, daß Komponente a) eine Flüssigkeit mit einer Viskosität von 30 bis 70 mPa.s bei 20°C ist.

6. Verwendung einer Dispersion nach einem oder mehreren der Patentansprüche 1 bis 5, dadurch gekennzeichnet, daß Komponente a) durchschnittlich 0,1 bis 0,5 Hydroxylgruppen pro Siliciumatom enthält.

7. Verwendung einer Dispersion nach einem oder mehreren der Patentansprüche 1 bis 6, dadurch gekennzeichnet, daß Komponente b) ein Polydimethylsiloxan ist, in dem eine oder mehrere Methylgruppen jeweils durch einen Rest R ersetzt sind und daß jeder dieser Reste R zwei Stickstoffatome enthält.

8. Verwendung einer Dispersion nach Patentanspruch 7, dadurch gekennzeichnet, daß ein Teil oder alle der Reste R je eine sekundäre Aminogruppe und eine Amidogruppe enthalten.

9. Verwendung einer Dispersion nach einem oder mehreren der Patentansprüche 1 bis 8, dadurch gekennzeichnet, daß Komponente b) ein Polysiloxan ist, das einen oder mehrere, je an ein Siliciumatom gebundene Reste der Formel 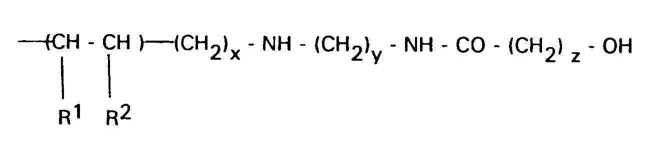 enthält, worin R¹ und R² unabhängig voneinander für H oder CH₃ stehen, jedoch mindestens einer dieser Reste für H steht, x für eine Zahl von 0 bis 3 und y und z unabhängig voneinander für eine Zahl von 2 bis 4 stehen.

10. Verwendung einer Dispersion nach einem oder mehreren der Patentansprüche 1 bis 9, dadurch gekennzeichnet, daß Komponente c) ein Polydimethylsiloxan ist, in dem eine oder mehrere Methylgruppen jeweils durch einen Rest der Formel 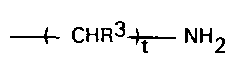 oder einen Rest der Formel 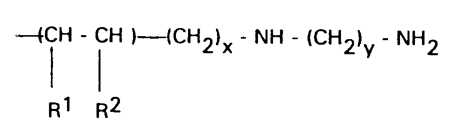 ersetzt sind, wobei R¹, R², x, y die in Anspruch 9 angegebene Bedeutung haben, t einen Wert von 2 bis 4 besitzt und alle Reste R³ unabhängig voneinander für H oder CH₃ stehen.

11. Verwendung einer Dispersion nach einem oder mehreren der Patentansprüche 1 bis 10, dadurch gekennzeichnet, daß Komponente b) durchschnittlich 1 bis 2,5 Amidogruppen pro 100 Siliciumatomen enthält.

12. Verwendung einer Dispersion nach einem oder mehreren der Patentansprüche 1 bis 11, dadurch gekennzeichnet, daß das durchschnittliche Verhältnis S_{N}:S_{Si} im Bereich von 1:40 bis 1:320, vorzugsweise 1:40 bis 1:110, liegt, wobei S_{N} die Summe der Anzahl der primären Aminogruppen in den Komponenten b) und c) ist und S_{Si} die Summe der Anzahl derjenigen Siliciumatome in den Komponenten b) und c) ist, an die keine stickstoffhaltigen Substituenten gebunden sind.

13. Verwendung einer Dispersion nach einem oder mehreren der Patentansprüche 1 bis 12, dadurch gekennzeichnet, daß die Anzahl Z_{OH} der Hydroxylgruppen in Komponente a), die gesamte Anzahl Z_{NHCO} der Amidogruppen in Komponenten b) und c) und die gesamte Anzahl Z_{NH2} der primären Aminogruppen in den Komponenten b) und c) zueinander in folgenden Verhältnissen stehen:
- Z_{NH2}:Z_{OH} = 1:0,1 bis 1:21, vorzugsweise 1:0,1 bis 1:3,5 und
- Z_{NH2}:Z_{NHCO} = 1:0,2 bis 1:2,5

14. Verwendung einer Dispersion nach einem oder mehreren der Patentansprüche 1 bis 13, dadurch gekennzeichnet, daß die Dispersion 5 bis 40 Gew.% Polysiloxane (Summe der Komponenten a), b) und c)) enthält.

## Claims (Claims for the following Contracting State(s): AT, BE, CH, DE, DK, FR, GB, IT, LI, NL, PT, SE)

1. Aqueous dispersion containing at least the following components:
a) a nitrogen-free polysiloxane having on average at least 2 hydroxyl groups directly bound to one silicon atom each
b) a polysiloxane containing on average at least one amido group in the molecule
with the proviso that either component b) additionally contains at least one primary amino group or that the dispersion additionally contains, as component c), a polysiloxane having on average at least one primary amino group in the molecule.

2. Dispersion according to Patent Claim 1, characterised in that one or both of components b) and c) additionally contains on average at least one secondary amino group.

3. Dispersion according to Patent Claim 1 or 2, characterised in that components a), b) and c) are polysiloxanes in which all radicals bound to silicon atoms and not containing any oxygen atoms or nitrogen atoms are methyl radicals.

4. Dispersion according to one or more of Patent Claims 1 to 3, characterised in that it additionally contains a dispersant or a mixture of dispersants in an amount of 25 to 60 parts by weight, relative to 100 parts by weight of the total amount of polysiloxanes.

5. Dispersion according to one or more of Patent Claims 1 to 4, characterised in that component a) is a liquid having a viscosity of 30 to 70 mPa.s at 20°C.

6. Dispersion according to one or more of Patent Claims 1 to 5, characterised in that component a) contains on average 0.1 to 0.5 hydroxyl groups per silicon atom.

7. Dispersion according to one or more of Patent Claims 1 to 6, characterised in that component b) is a polydimethylsiloxane in which one or more methyl groups are each replaced by the radical R and that each of these radicals R contains 2 nitrogen atoms.

8. Dispersion according to Patent Claim 7, characterised in that some or all of the radicals R contain a secondary amino group and an amido group each.

9. Dispersion according to one or more of Patent Claims 1 to 8, characterised in that component b) is a polysiloxane containing one or more radicals bound to one silicone atom each of the formula 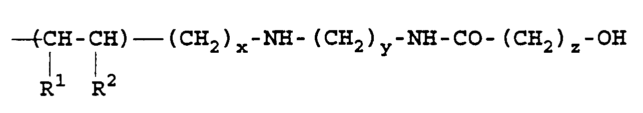 in which R¹ and R², independently of one another, are H or CH₃, but at least one of these radicals is H, x is a number from 0 to 3 and y and z, independently of one another, are a number from 2 to 4.

10. Dispersion according to one or more of Patent Claims 1 to 9, characterised in that component c) is a polydimethylsiloxane in which one or more methyl groups are each replaced by a radical of the formula 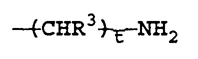 or a radical of the formula 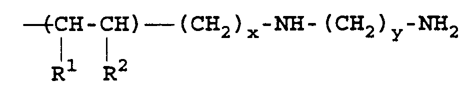 in which R¹, R², x, y have the meaning given in Claim 9, t has a value from 2 to 4, and all radicals R³ are, independently of one another, H or CH₃.

11. Dispersion according to one or more of Patent Claims 1 to 10, characterised in that component b) contains on average 1 to 2.5 amido groups per 100 silicon atoms.

12. Dispersion according to one or more of Patent Claims 1 to 11, characterised in that the average S_{N}:S_{Si} ratio is in the range from 1:40 to 1:320, preferably 1:40 to 1:110, S_{N} being the sum of the number of primary amino groups in components b) and c) and S_{Si} the sum of the number of those silicon atoms in components b) and c) to which no nitrogen-containing substituents are bound.

13. Dispersion according to one or more of Patent Claims 1 to 12, characterised in that the number Z_{OH} of the hydroxyl groups in component a), the total number Z_{NHCO} of the amido groups in components b) and c) and the total number Z_{NH2} of the primary amino groups in components b) and c) show the following ratios with respect to one another:
- Z_{NH2}:Z_{OH} = 1:0.1 to 1:21, preferably 1:0.1 to 1:3.5 and
- Z_{NH2}:Z_{NHCO} = 1:0.2 to 1:2.5

14. Dispersion according to one or more of Patent Claims 1 to 13, characterised in that the dispersion contains 5 to 40% by weight of polysiloxanes (sum of components a), b) and c)).

15. Use of a dispersion according to one or more of Patent Claims 1 to 14 for the treatment of fibre materials.

## Claims (Claims for the following Contracting State(s): ES)

1. Use of an aqueous dispersion containing at least the following components:
a) a nitrogen-free polysiloxane having on average at least 2 hydroxyl groups directly bound to one silicon atom each
b) a polysiloxane containing on average at least one amido group in the molecule for the treatment of fibre materials,
with the proviso that either component b) additionally contains at least one primary amino group or that the dispersion additionally contains, as component c), a polysiloxane having on average at least one primary amino group in the molecule.

2. Use of a dispersion according to Patent Claim 1, characterised in that one or both of components b) and c) additionally contains on average at least one secondary amino group.

3. Use of a dispersion according to Patent Claim 1 or 2, characterised in that components a), b) and c) are polysiloxanes in which all radicals bound to silicon atoms and not containing any oxygen atoms or nitrogen atoms are methyl radicals.

4. Use of a dispersion according to one or more of Patent Claims 1 to 3, characterised in that it additionally contains a dispersant or a mixture of dispersants in an amount of 25 to 60 parts by weight, relative to 100 parts by weight of the total amount of polysiloxanes.

5. Use of a dispersion according to one or more of Patent Claims 1 to 4, characterised in that component a) is a liquid having a viscosity of 30 to 70 mPa.s at 20°C.

6. Use of a dispersion according to one or more of Patent Claims 1 to 5, characterised in that component a) contains on average 0.1 to 0.5 hydroxyl groups per silicon atom.

7. Use of a dispersion according to one or more of Patent Claims 1 to 6, characterised in that component b) is a polydimethylsiloxane in which one or more methyl groups are each replaced by the radical R and that each of these radicals R contains 2 nitrogen atoms.

8. Use of a dispersion according to Patent Claim 7, characterised in that some or all of the radicals R contain a secondary amino group and an amido group each.

9. Use of a dispersion according to one or more of Patent Claims 1 to 8, characterised in that component b) is a polysiloxane containing one or more radicals bound to one silicone atom each of the formula 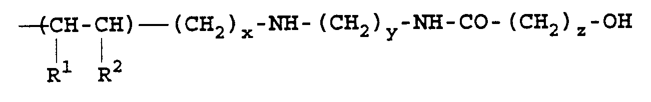 in which R¹ and R², independently of one another, are H or CH₃, but at least one of these radicals is H, x is a number from 0 to 3 and y and z, independently of one another, are a number from 2 to 4.

10. Use of a dispersion according to one or more of Patent Claims 1 to 9, characterised in that component c) is a polydimethylsiloxane in which one or more methyl groups are each replaced by a radical of the formula 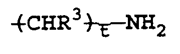 or a radical of the formula 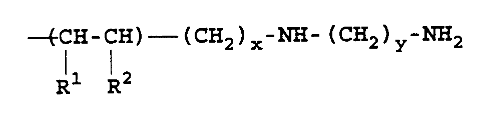 in which R¹, R², x, y have the meaning given in Claim 9, t has a value from 2 to 4, and all radicals R³ are, independently of one another, H or CH₃.

11. Use of a dispersion according to one or more of Patent Claims 1 to 10, characterised in that component b) contains on average 1 to 2.5 amido groups per 100 silicon atoms.

12. Use of a dispersion according to one or more of Patent Claims 1 to 11, characterised in that the average S_{N}:S_{Si} ratio is in the range from 1:40 to 1:320, preferably 1:40 to 1:110, S_{N} being the sum of the number of primary amino groups in components b) and c) and S_{Si} the sum of the number of those silicon atoms in components b) and c) to which no nitrogen-containing substituents are bound.

13. Use of a dispersion according to one or more of Patent Claims 1 to 12, characterised in that the number Z_{OH} of the hydroxyl groups in component a), the total number Z_{NHCO} of the amido groups in components b) and c) and the total number Z_{NH2} of the primary amino groups in components b) and c) show the following ratios with respect to one another:
- Z_{NH2}:Z_{OH} = 1:0.1 to 1:21, preferably 1:0.1 to 1:3.5 and
- Z_{NH2}:Z_{NHCO} = 1:0.2 to 1:2.5

14. Use of a dispersion according to one or more of Patent Claims 1 to 13, characterised in that the dispersion contains 5 to 40% by weight of polysiloxanes (sum of components a), b) and c)).

## Revendications (Revendications pour l'(les) Etat(s) contractant(s) suivant(s): AT, BE, CH, DE, DK, FR, GB, IT, LI, NL, PT, SE)

1. Dispersion aqueuse, qui contient au moins les constituants suivants:
a) un polysiloxane dépourvu d'azote et comportant en moyenne au moins deux groupes hydroxyles fixés directement chacun sur un atome de silicium,
b) un polysiloxane, qui contient en moyenne dans sa molécule au moins un groupe amido,
à la condition que le constituant (b) contienne en outre au moins un groupe amino primaire ou que la dispersion contienne en outre comme constituant(c) un polysiloxane comportant en moyenne au moins un groupe amino primaire dans sa molécule.

2. Dispersion selon la revendication 1, caractérisée en ce que l'un des constituants (b) et (c), ou les deux, contient ou contiennent en outre en moyenne au moins un groupe amino secondaire.

3. Dispersion selon la revendication 1 ou 2, caractérisée en ce que les constituants (a), (b) et (c) sont des polysiloxanes dans lesquels tous les restes fixés sur des atomes de silicium, et qui ne contiennent pas d'atomes d'oxygène ou d'atomes d'azote, sont des restes méthyles.

4. Dispersion selon une ou plusieurs des revendications 1 à 3, caractérisée en ce qu'elle contient en outre un dispersant ou un mélange de dispersants, présent(s) en une quantité de 25 à 60 parties en poids, par rapport à 100 parties en poids de la quantité totale des polysiloxanes.

5. Dispersion selon une ou plusieurs des revendications 1 à 4, caractérisée en ce que le constituant (a) est un liquide ayant une viscosité de 30 à 70 mPa.s à 20°C.

6. Dispersion selon une ou plusieurs des revendications 1 à 5 , caractérisée en ce que le constituant (a) contient en moyenne 0,1 à 0,5 groupe hydroxyle par atome de silicium.

7. Dispersion selon une ou plusieurs des revendications 1 à 6, caractérisée en ce que le constituant (b) est un polydiméthylsiloxane dans lequel un ou plusieurs groupes méthyles est ou sont remplacé(s) chacun par un reste R, et en ce que chacun de ces restes R contient deux atomes d'azote.

8. Dispersion selon la revendication 7, caractérisée en ce qu'une partie ou la totalité des restes R contient chacun un groupe amino secondaire et un groupe amido.

9. Dispersion selon une ou plusieurs des revendications 1 à 8, caractérisée en ce que le constituant (b) est un polysiloxane qui contient un ou plusieurs restes, fixés chacun sur un atome de silicium et répondant à la formule : 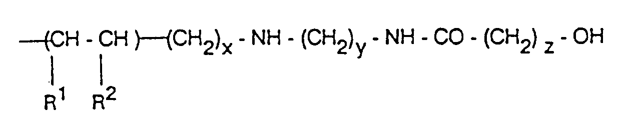 dans laquelle R¹ et R² représentent chacun, indépendamment l'un de l'autre, H ou CH₃, mais au moins l'un de ces restes représente H, x est un nombre valant 0 à 3 et y et z représentent chacun, indépendamment l'un de l'autre, un nombre valant de 2 à 4.

10. Dispersion selon une ou plusieurs des revendications 1 à 9, caractérisée en ce que le constituant (c) est un polydiméthylsiloxane dans lequel un ou plusieurs groupes méthyles est ou sont remplacé(s) chacun par un reste de formule : 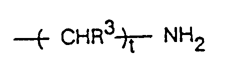 ou par un reste de formule : 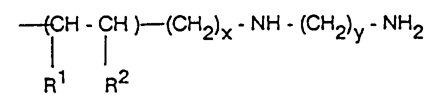 dans lesquelles R¹, R², x et y ont le sens indiqué à la revendication 9; t vaut 2 à 4 et tous les restes R³ représentent chacun, indépendamment l'un de l'autre, H ou un groupe CH₃.

11. Dispersion selon une ou plusieurs des revendications 1 à 10, caractérisée en ce que le constituant (b) contient en moyenne 1 à 2,5 groupes amido pour 100 atomes de silicium.

12. Dispersion selon une ou plusieurs des revendications 1 à 11, caractérisée en ce que le rapport moyen S_{N}:S_{Si} se situe entre 1:40 et 1:320, avantageusement entre 1:40 et 1:110, S_{N} désignant la somme des nombres des groupes amino primaires dans les constituants (b) et (c), et S_{Si} désignant la somme des nombres des atomes de silicium dans les constituants (b) et (c) qui ne portent pas de substituant(s) contenant de l'azote.

13. Dispersion selon une ou plusieurs des revendications 1 à 12, caractérisée en ce que le nombre Z_{OH} des groupes hydroxyles présents dans le constituant (a), le nombre total Z_{NHCO} des groupes amido présents dans les constituants (b) et (c) et le nombre total Z_{NH2} des groupes amino primaires présents dans les constituants (b) et (c) présentent les rapports mutuels suivants :
Z_{NH2}:Z_{OH} = 1:0,1 à 1:21, avantageusement 1:0,1 à 1:3,5, et
Z_{NH2}:Z_{NHCO} = 1:0,2 à 1:2,5.

14. Dispersion selon une ou plusieurs des revendications 1 à 13, caractérisée en ce que la dispersion contient 5 à 40 % en poids de polysiloxanes (somme des constituants (a), (b) et (c)).

15. Utilisation d'une dispersion selon une ou plusieurs des revendications 1 à 14 pour le traitement de matériaux fibreux.

## Revendications (Revendications pour l'(les) Etat(s) contractant(s) suivant(s): ES)

1. Utilisation d'une dispersion aqueuse, qui contient au moins les constituants suivants :
a) un polysiloxane dépourvu d'azote et présentant en moyenne au moins deux groupes hydroxyles fixés directement chacun sur un atome de silicium,
b) un polysiloxane, qui contient en moyenne dans sa molécule au moins un groupe amido,
pour traiter des matières fibreuses,
à la condition que le constituant (b) contienne en outre au moins un groupe amino primaire ou que la dispersion contienne en outre, comme constituant (c), un polysiloxane présentant en moyenne au moins un groupe amino primaire dans sa molécule.

2. Utilisation d'une dispersion selon la revendication 1, caractérisée en ce que l'un des constituants (b) et (c), ou les deux, contient ou contiennent en outre en moyenne au moins un groupe amino secondaire.

3. Utilisation d'une dispersion selon la revendication 1 ou 2, caractérisée en ce que les constituants (a), (b) et (c) sont des polysiloxanes dans lesquels tous les restes fixés sur des atomes de silicium, et qui ne contiennent pas d'atomes d'oxygène ou d'atomes d'azote, sont des restes méthyles.

4. Utilisation d'une dispersion selon une ou plusieurs des revendications 1 à 3, caractérisée en ce qu'elle contient en outre un dispersant ou un mélange de dispersants, présent(s) en une quantité de 25 à 60 parties en poids, pour 100 parties en poids de la quantité totale des polysiloxanes.

5. Utilisation d'une dispersion selon une ou plusieurs des revendications 1 à 4, caractérisée en ce que le constituant (a) est un liquide ayant une viscosité de 30 à 70 mPa.s à 20°C.

6. Utilisation d'une dispersion selon une ou plusieurs des revendications 1 à 5, caractérisée en ce que le constituant (a) contient en moyenne 0,1 à 0,5 groupe hydroxyle par atome de silicium.

7. Utilisation d'une dispersion selon une ou plusieurs des revendications 1 à 6, caractérisée en ce que le constituant (b) est un polydiméthylsiloxane dans lequel un ou plusieurs groupes méthyles est ou sont chacun remplacé(s) par un reste R, et en ce que chacun de ces restes R contient deux atomes d'azote.

8. Utilisation d'une dispersion selon la revendication 7, caractérisée en ce qu'une partie ou la totalité des restes R contient chacun un groupe amino secondaire et un groupe amido.

9. Utilisation d'une dispersion selon une ou plusieurs des revendications 1 à 8, caractérisée en ce que le constituant (b) est un polysiloxane qui contient un ou plusieurs restes, fixés chacun sur un atome de silicium et répondant à la formule : 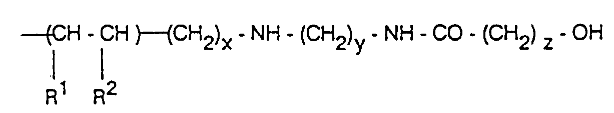 dans laquelle R¹ et R² représentent chacun, indépendamment l'un de l'autre, un atome de H ou un groupe CH₃, mais au moins l'un de ces restes représente H; x est un nombre valant 0 à 3, et y et z représentent chacun, indépendamment l'un de l'autre, un nombre valant de 2 à 4.

10. Utilisation d'une dispersion selon une ou plusieurs des revendications 1 à 9, caractérisée en ce que le constituant (c) est un polydiméthylsiloxane dans lequel un ou plusieurs groupes méthyles est ou sont remplacé(s) chacun par un reste de formule : 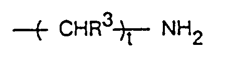 ou par un reste de formule : 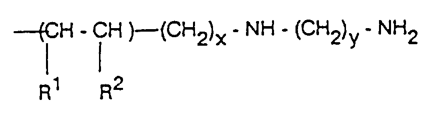 formules dans lesquelles R¹, R², x et y ont le sens indiqué à la revendication 9; t vaut 2 à 4 et tous les restes R³ représentent chacun, indépendamment l'un de l'autre, H ou un groupe CH₃.

11. Utilisation d'une dispersion selon une ou plusieurs des revendications 1 à 10, caractérisée en ce que le constituant (b) contient en moyenne 1 à 2,5 groupes amido pour 100 atomes de silicium.

12. Utilisation d'une dispersion selon une ou plusieurs des revendications 1 à 11, caractérisée en ce que le rapport moyen S_{N}:S_{Si} se situe entre 1:40 et 1:320, avantageusement entre 1:40 et 1:110, S_{N} représentant la somme des nombres des groupes amino primaires présents dans les constituants (b) et (c), et S_{Si} représentant la somme des nombres des atomes de silicium, présents dans les constituants (b) et (c) et qui ne portent pas de substituant(s) contenant de l'azote.

13. Utilisation d'une dispersion selon une ou plusieurs des revendications 1 à 12, caractérisée en ce que le nombre Z_{OH} des groupes hydroxyles présents dans le constituant (a), le nombre total Z_{NHCO} des groupes amido présents dans les constituants (b) et (c) et le nombre total Z_{NH2} des groupes amino primaires présents dans les constituants (b) et (c) présentent les rapports mutuels suivants :
Z_{NH2}:Z_{OH} = 1:0,1 à 1:21, avantageusement 1:0,1 à 1:3,5, et
Z_{NH2}:Z_{NHCO} = 1:0,2 à 1:2,5.

14. Utilisation d'une dispersion selon une ou plusieurs des revendications 1 à 13, caractérisée en ce que la dispersion contient 5 à 40 % en poids de polysiloxanes (somme des constituants (a), (b) et (c)).
